# EUROPEAN PATENT APPLICATION

(11) **EP 1 630 735 A1**
(43) Date of publication of application: **01.03.2006**
(21) Application number: 05017545.4
(22) Date of filing: 11.08.2005
(51) Int. Cl.: G06Q 10/00

(54) **Product environmental information sharing management system**

(30) Priority: 31.08.2004 JP 2004251213
(71) Applicant: HITACHI, LTD., Chiyoda-ku Tokyo 100-8280 (JP)
(72) Inventor: Ichikawa, Yoshiaki c/o Hitachi, Ltd. I.P. Office, Chiyoda-ku, Tokyo 100-8220 (JP); Kobayashi, Shiro c/o Hitachi, Ltd. I.P. Office, Chiyoda-ku, Tokyo 100-8220 (JP)
(74) Representative: Strehl Schübel-Hopf & Partner

(57) **Abstract**

A product environmental information sharing database is connected to a network, and a data registration processor in the database receives raw data from companies. A product information memory section stores product information regarding the raw data, products' component/composition data, hazard data and usage/quantity data. A forward chain processor calculates and records component compositions or hazard information regarding upstream data up to a substance level down through a supply chain. A backward chain processor traces the supply chain in a backward direction from the downstream data, so as to calculate the usage/quantity information. A confidentiality cancellation processor selects a disclosure range of target information based on a predetermined disclosure level. The processor also limits information items for disclosure based on a legal request for disclosure so as to handle a disclosure request from each company.

## Description

### BACKGROUND OF THE INVENTION

The present invention relates to a technique for assessing an environmental impact (including a harmful effect on public health) of products and chemicals put on the market through the supply chain, and relates to an information management technique preferable for assessing the contents of environmental impact substances or environmental risks thereof.

Commercial products (e.g. chemicals) are distributed to society along the so-called supply chain. That is, the supply chain network begins from nearly pure substance products (raw materials, etc.) that are provided by substance manufacturing companies on the uppermost stream. Many companies purchase such products (raw materials, etc.), use, compound, add or arrange the purchased products as raw materials in accordance with their own manufacturing process, thereby manufacturing new products. Further, other companies use the manufactured products for wide purposes such as printing, painting, coating or achieving physicochemical functions, thereby manufacturing their products. Finally, many companies use thus manufactured products, thereby manufacturing end products (such as vehicles, electric/electronic products, construction materials, daily goods, clothes, etc.). In this manner, the supply chain is formed in a long and complicated network.

Recently, the composition, hazard and risks of various commercial products are some of the most important concerns from the social and business management points of view. In such circumstances, the European Parliament presented a proposal for a new EU regulatory framework, called REACH (Registration, Evaluation, Authorization and Restriction of Chemicals) in 2003. Based on the old ways, it is necessary to control the impact (called a hazard) of those pure chemical substances (single type of molecules or atoms) manufactured by the uppermost stream companies, on the public health or ecosystems. Unlike the old ways, according to a recent proposal, those substances are all traced along the supply chain so as to understand how these substances are used, and understand the types, contents, usage and (sold) quantity of the chemical substances included in the downstream products (e.g. TV, etc.). As a result, the degree of chemical risks are desirably estimated and controlled, collectively as a whole.

Conventionally, several systems for collecting chemical information are disclosed. A Japanese patent publication No. 3361051 discloses a technique for retrieving environmental information regarding other companies-manufactured goods necessary for manufacturing products from an environmental information database of other companies through a network communication system. Further, according to the disclosed technique, the retrieved environmental information regarding other companies manufactured goods and additional environmental information regarding the manufactured products by itself (company) are calculated according to information item, thereby generating environmental information of their own products.

### SUMMARY OF THE INVENTION

Generally speaking, the environmental impact assessment has several steps: estimating an exposure quantity (of the human body and the environment) based on the usage and quantity of substances; obtaining a product of the hazard value and the exposure quantity; and assessing risks. The old way of controlling the chemical substances has nothing beyond the controlling of the hazard (controlling of the harmful effect) . However, in recent years, it is aimed principally at controlling risks. To do this, it is important to prepare an information system to collect information regarding the individual product from a great number of companies within the supply chain.

According to the conventional techniques, (for instance the Japanese patent publication No. 3361061), relaying of information is assumed to be done in the direction from the upstream side to downstream side (from those companies manufacturing materials to companies manufacturing composed goods or finished products) of the supply chain. However, no consideration is given to assembling of information in the direction from the downstream side (companies manufacturing composed goods or finished products) to upstream side (companies manufacturing materials or parts). In addition, no consideration is given to information confidentiality regarding some company secret matters.

According to the present invention, the following problems should be examined and solved. The first problem aims to acquire usage and quantity (used or sold) information regarding target products. Such information cannot be acquired simply by assembling information in the direction from the upstream side of the supply chain.

The second problem is related to confidential information. Confidential information is disclosed from companies based on some restrictions regarding trade secrets. Specifically, depending on information attributes, some information cannot be disclosed to any other company, can be disclosed only to customers, can be disclosed widely to society, and disclosed in accordance with a legal duty. However, unless other companies' confidential information is used, a company's own product information (regarding component compositions, quantity information according to usage) cannot be obtained.

That is, information from other companies is necessary in order to understand through what steps those necessary materials have been made from pure substances, for what purpose company-made products are used, and in which products the company-made products are incorporated. From this point of view, generally, information should thus be acquired from other companies rather than the company's own information. In other words, important information regarding its own company-manufactured products needs to mostly be given from others. Even in such circumstances, composition information or quantity (sold products) information is the trade secrets. Such information thus cannot easily be disclosed.

The present invention aims to solve the above dilemmatic condition, by collecting confidential information into a predetermined database managed by a third party and sharing collected results.

The present invention has been made in consideration of the above, and it is accordingly an object of the present invention to realize collection and sharing of information necessary for risk assessment, while securely keeping information confidentiality.

To achieve the above first problem, it is necessary to assemble usage/quantity information in a backward direction from the downstream side along the supply chain, in addition to component/composition information composed of information in a direction from the upstream side of the supply chain. That is, relaying of information along the supply chain needs to be executed based on a new idea, (i.e. in both directions, from the upstream to downstream and then to the upstream again). The product environmental information sharing database is connected to a network for collecting information from all of the companies. In this database, a data registration processor registers raw data regarding the company's own products after being sent from other companies, in a product information memory section.

The product information memory section stores information component/composition data, hazard data, usage/quantity data representing all the products.

A forward chain processor sequentially calculates component compositions or hazard information of the substances included in the middle products or finished products, while sequentially tracing the supply chain from the uppermost data, based on various data registered from companies.

A backward chain processor calculates and records usage/quantity information of the middle products or raw material products using on the component/composition data, while sequentially tracing the supply chain in a backward direction from the lowermost stream data, based on various data registered from companies.

To achieve the second problem, a confidentiality cancellation processor executes a predetermined operation. This operation is executed based on an assumption that it is necessary to usage other companies' confidential information (secret information) for calculating predetermined product information while only a calculated (processed) result should be presented. That is, all of the companies register raw information including their confidential information. As a result, companies can acquire "calculated result" representing information of the company's own products. This calculated result is generated based on other companies' product information that cannot be acquired by themselves. This is a great advantage acquired in return for registration of product information of themselves. According to this idea, the confidentiality cancellation processor selects a disclosure range of target information based on a disclosure level defined in advance according to each product and each addressee company. In addition, the confidentiality cancellation processor limits disclosure data items based on predetermined legal request items so as to cope with disclosure requests from the companies.

The system according to the present invention can realize collection and sharing of information necessary for assessing the environmental impact risks in association with a group of products through the supply chain.

### BRIEF DESCRIPTION OF THE DRAWINGS

Fig. 1 is a schematic diagram showing product environmental information sharing management system according to an embodiment of the present invention;
Fig. 2 is a diagram exemplifying a data structure of a basic part of product information;
Fig. 3A and Fig. 3B are diagrams each exemplifying a data structure regarding information disclosure levels.
Fig. 4 is a diagram exemplifying a structure of component/composition data;
Fig. 5 is a diagram exemplifying a structure of product level hazard data;
Fig. 6 is a diagram exemplifying a structure of usage/quantity data;
Fig. 7 is a supplementary diagram exemplifying operations of a backward chain processor;
Fig. 8 is a diagram exemplifying an operation flow for explaining an operation of a forward chain processor;
Fig. 9 is a diagram exemplifying an operational flow for further explaining an operation of the forward chain processor;
Fig. 10 is a diagram exemplifying an operational flow for explaining an operation of the backward chain processor;
Fig. 11 is an exemplary diagram for supplementing some procedures of Fig. 10;
Fig. 12 is a diagram exemplifying an operational flow for explaining an operation of a confidentiality cancellation processor; and
Fig. 13A and Fig. 13B are diagrams each exemplifying a structure of data based on a legal request for disclosure.

### DETAILED DESCRIPTION OF THE PREFERRED EMBODIMENTS

A preferred embodiment of the present invention will now be described.

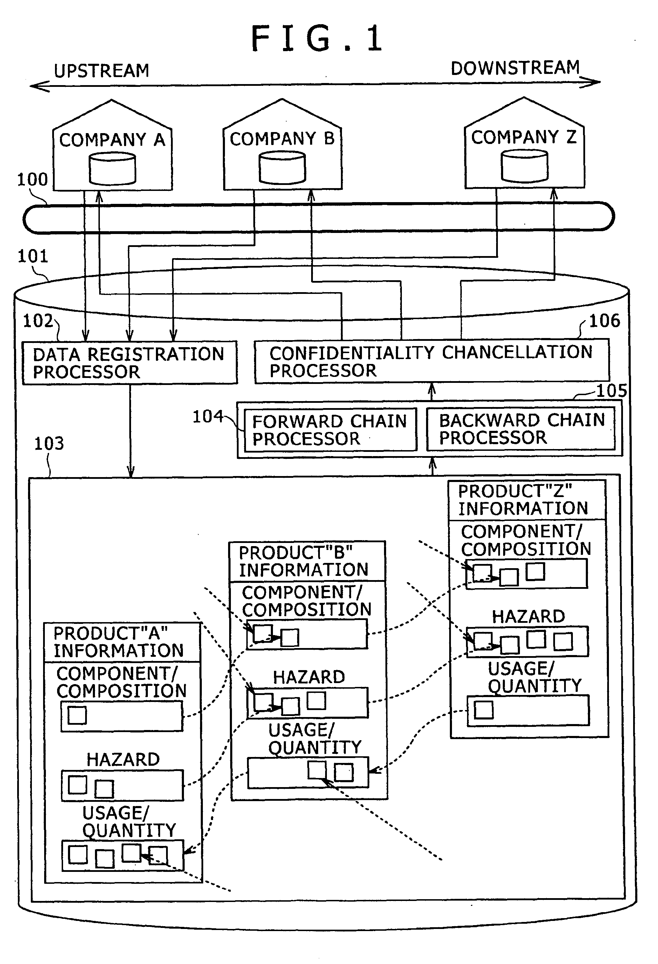

Fig. 1 is a schematic diagram of a product environmental information calculator according to an embodiment of the present invention. Among a group of companies, manufacture activities form a supply chain. Through the supply chain, a predetermined company purchases materials from a partner company and manufactures its own products, and the predetermined company provides a client company with the manufactured products as materials, thereby manufacturing finished products from raw materials. In the example of Fig. 1, a company A is a manufacturing company of material products A. Another company B purchases these material products, processes the purchased products to manufacture products B, and sells the manufactured products B. Further, the products B are purchased as material products for other companies' products. After going through such a chain, finished products Z of a company Z are put on the market. Actually, such a supply chain is spread into branches in the middle of the chain and includes a network system having a number of branches meeting together, instead of being made up of a single chain.

In the supply chain, the raw materials are positioned in the upstream direction, while the finished products are positioned in the downstream direction. For example, for predetermined middle products, an "upstream company" is one that manufactures middle parts or raw materials necessary for manufacturing the middle products, and "upstream data" is represents such middle parts or raw materials. Further, for predetermined middle products, a "downstream company" is one that manufactures products including the predetermined middle products, and "downstream data" represents the products including the predetermined middle products.

As shown in Fig. 1, in this embodiment, the group of companies constituting the supply chain can execute data communications with a product environmental information sharing database 101 through a public network 100.

The product environmental information sharing database 101 includes a data registration processor 102 which receives raw data regarding the company's own products from the group of companies and carries out a process for registering data into a product information memory section 103.

The product information memory section 103 stores the component/composition data, hazard data, usage/quantity data, in association with all products on the supply chain. In the environmental impact assessment, hazardousness (inherent harmfulness of chemicals) should be estimated before everything else. Next, a hazardous substance exposure quantity of the human body and environment is estimated, based on the usage and its usage quantity. Finally, a product of the hazardousness and the exposure quantity is obtained so as to assess the risks. Information regarding the substance usage and the quantity (of sold products) necessary for risk assessment is stored in the memory unit.

Note that the exposure quantity represents a quantity of chemicals to be taken into the human body or living body through breathing, after the chemicals come out in the environment. For the chemicals having a low level of harmfulness, a high level of risk is still assessed as long as a large exposure quantity is estimated. On the contrary, for the chemicals having relatively a high level of harmfulness, a low level of risk is assessed as long as a small exposure quantity is estimated.

A forward chain processor 104 calculates and stores component compositions or hazard information regarding the substance in the middle or finished products, based on the information acquired sequentially in a direction from the uppermost stream data along the supply chain, using various data registered by companies.

A backward chain processor 105 calculates and stores usage/quantity information of middle or material products, based on the information acquired sequentially in a backward direction from the lowermost stream data along the supply chain together with the component/composition data, using various data registered by companies.

Note that such calculation methods have been described only by way of example. Instead of beginning from the uppermost stream data, the calculation may be carried out using sequentially from an N-th data from the uppermost stream data. The calculation may be carried out, based on sequentially from any data along a path between the uppermost stream data and the lowermost stream data, along the upstream or downstream of the supply chain. Further, product information may be calculated using the data on the spread route of the supply chain, or any other calculation method may be adopted.

Resultant data processed in accordance with this embodiment may be displayed on a screen and arranged in the order from the upstream to downstream direction or from the downstream to upstream direction, along the route of the supply chain. The resultant data may be displayed on a screen both in the upstream and downstream directions, in response to a display instruction from a user of this database system. Further, the resultant chemical information may be displayed in association with product information, or data calculated in accordance with any other method may be provided.

A confidentiality cancellation processor 106 selects the disclosure range of information, based on predetermined disclosure levels provided according to product and addressee company. The confidentiality cancellation processor limits disclosure data items based on predetermined legal request items so as to handle a disclosure request of each company.

Though not illustrated, each company system includes requested hardware (CPU, memory, disk, etc.) or software (OS, DBMS, Web server program, various clients programs, etc.), thus using information stored in the product environmental information sharing database 101 through reference or transmission/reception via a network, etc. Note that the product environmental information sharing database 101 represents the entire system including computers, programs, memory devices, etc. that executes the above-described processes. In addition, each of processors included in the database 101 is a program for executing data processing or information storage. Such programs may be executed either by respective computers, by a single computer controlling the entire processing or by any other method.

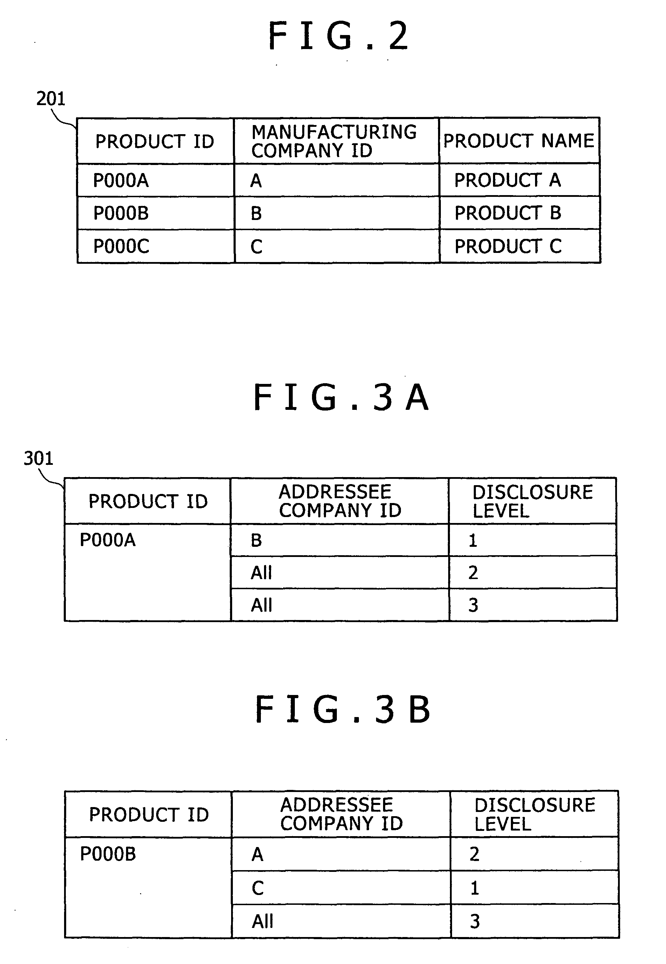

Referring to Fig. 2 to Fig. 6, a data structure according this embodiment will now specifically be depicted. Fig. 2 illustrates a product basic information table 201. This table is composed of a group of records. Each of the records includes a "product ID" field identifying a product, a "manufacturing company ID" field identifying a manufacturing company and a "product name" field identifying a product name. Note that the code system of the product ID and the manufacturing company ID will be used in the following tables as well.

Fig. 3A and Fig. 3B define an information disclosure level table 301 used by the confidentiality cancellation processor 106. This table includes records each having a "product ID" field as a key, an "addressee company ID" identifying the addressee company and a "disclosure level" field. Some definitions can be given for the disclosure levels. In one example, the disclosure level 1 defines disclosure of all data including raw data, the disclosure level 2 defines disclosure of a calculation result regarding a corresponding product, and the disclosure level 3 defines disclosure of information items according to legal requests.

For example, the table shown in the upper part of the illustration includes records regarding products of a raw material manufacturing company A. This table explains that raw data is disclosed to a direct customer, a company B, and the calculation result and disclosure information based on a legal request are disclosed to all companies. The table in the lower part of the illustration includes records regarding products of a middle product manufacturing company B, by way of example. This table explains that raw data is disclosed to a direct client, company C, the calculation result is disclosed to the direct partner, company A, and information based on legal request items disclosed to all companies. Note that the disclosure range of information defined with a high (low numerical value) disclosure level includes information of low disclosure levels. Thus, if defined as "level 1", all information is disclosed.

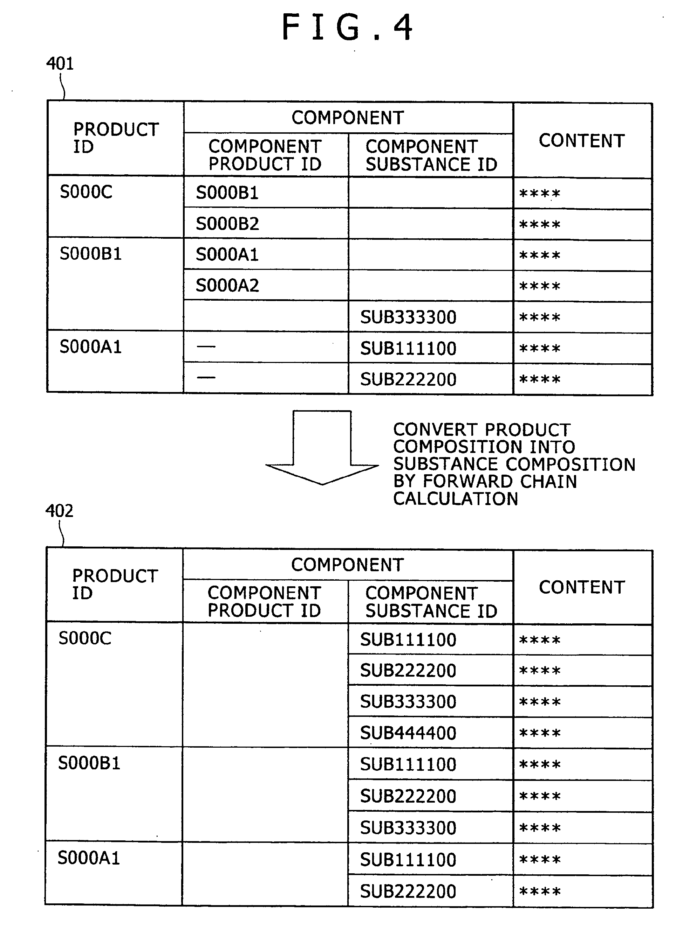

Referring to Fig. 4, component/composition data will now be described. The component/composition data includes both a raw data table 401 and a calculated data table 402. The component/composition (raw) data table 401 includes a "product ID" field as a key, two fields of "component product ID" and "component substance ID" as component information, and a "content" field. A predetermined ID is written either in the "component product ID" or "component substance ID" field.

Of those substances included in a product, each substance that is used/researched by itself (company) is specified in the row of the "component substance ID" field, while each substance purchased from any other company is specified in another row for specifying its component/composition product ID. In either case, the component content of the product is specified in the "content" field.

Note that the ID system of the above component substance IDs is determined in advance, and is used for other tables in this specification as well. For example, the CAS registry number defined by Chemical Abstracts Service of the U.S. or the EINECS (European Inventory of Existing Commercial Chemical Substances) number of Europe can be used. Note that the above-described substance IDs are described only by way of example, and other identifiers can be used.

It is an important aspect that this raw component/composition data table 401 gives data defining the supply chain. The records of this table show which products is a raw material of other products. Therefore, the supply chain can be traced by referring to the records. That is, the route information of the supply chain can be obtained using the record data. It is possible to define upstream data and downstream data with respect to data of a particular substance, based on the route information of the supply chain corresponding to the referred records.

The component/composition data table 402 shows resultant data regarding substance IDs representing all components, obtained as a result of the operation of a forward chain processor 104 as will be described later. This table stores calculation results based on the supply chain, and does not include confidential information suggesting the company relations or manufacturing methods shown in the raw data table 401.

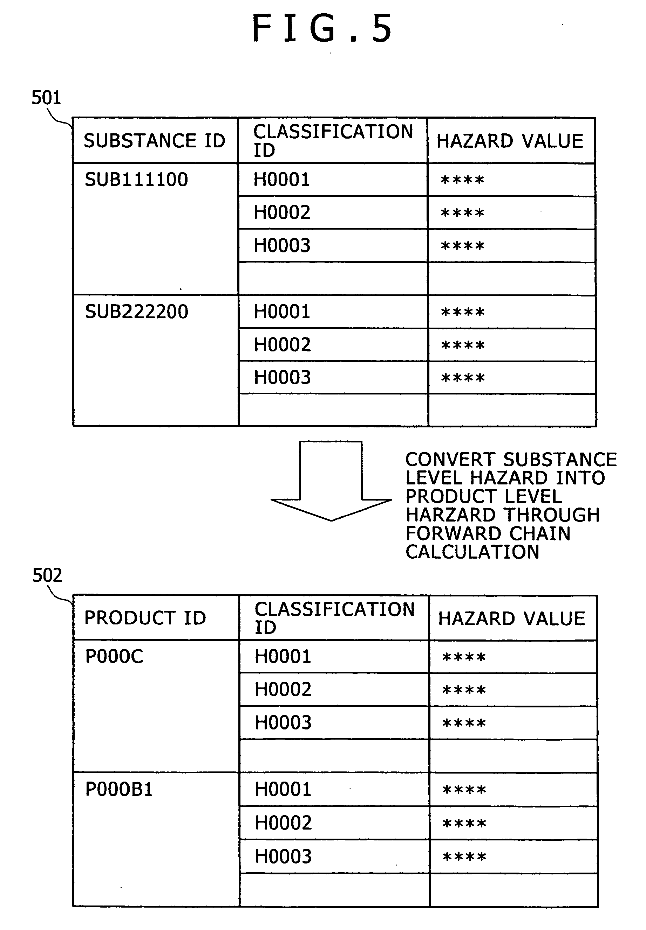

Referring to Fig. 5, hazard data will now be explained. The hazard data includes a substance level hazard table 501 and a product level hazard table 502. The substance level hazard table 501 includes a group of records each having a "substance ID" field as a key, a "classification ID" field for hazard, and a field of "hazard value" of a corresponding hazard. The hazard classification explains, for example, "mouse acute toxicity (LD50)". In addition, a corresponding hazard value represents the substance intake ("mg") per kilogram weight. The hazard value corresponding to the hazard classification of "carcinogenic risk in human life" represents the daily intake of substance per kilogram weight, resulting in the carcinogenesis rate of 10 raised to the minus 5^{th} power, when taken for seventy years.

In this embodiment, classification codes corresponding to such hazard classifications are defined, and are given as classification IDs. In the product level hazard table 502, resultant hazard information regarding products is obtained based on the component/composition data table by a process of the forward chain processor 104. This resultant calculation data is stored in the memory device.

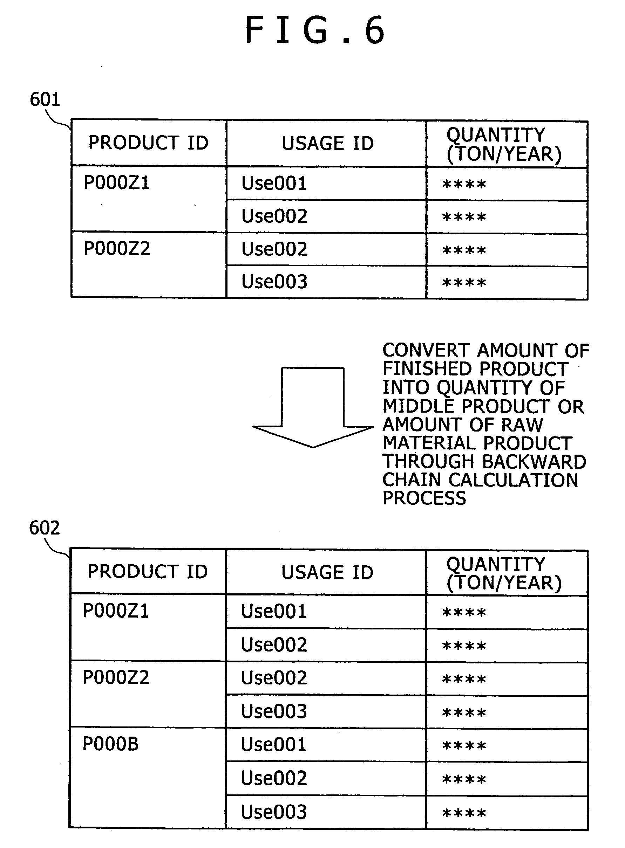

Referring to Fig. 6, usage/quantity data will now be explained. The usage/quantity data includes both a raw data table 601 and a calculated data table 602. The usage/quantity (raw) data table includes a "product ID" field as a key, a "usage ID" field and an "quantity (ton/year)" field. In this case, the usage ID represents a usage classification suggesting the exposure state of a corresponding product.

The exposure quantity (quantity of chemicals discharged to the environment with effects on living body) differs depending on the substance usage. The same chemical substance has different exposure quantities, for example, when used on the surface of a product, when used inside an airtight device, and when used for a device having temperature changes. Thus, it is important to make clear the usage classification in order to obtain the exposure quantity.

For example, the usage classification includes "coating", "solvent", "chemical synthesis material", "addition flame retarder", "display system material" and "coating for antirust". Codes are given in advance for such usage classifications. As a result, it becomes obvious for what purpose a predetermined product is used and what tonnage the predetermined product is used. However, in many cases, since disclosing the above information results in disclosing the manufacturing method or manufacturing cost (particularly regarding finished products), such information is confidential and can hardly be disclosed.

The usage/quantity data table 602 stores a calculation result representing a quantity of each of all products (including any other middle products or raw material products that are not specified in the raw data table 601) according to usage. Specifically, the backward chain processor 105 operates the calculation, based on the raw data table 601 and tracing information in a backward direction from the downstream to upstream of the supply chain. As a result, the backward chain processor 105 obtains the calculation result representing the quantity of all products (according to usage) including those middle products and raw materials that are not specified in the raw data table 601. It is difficult to estimate information representing the usage and quantity information (used for the calculation) of the finished products, only with reference to the calculation result regarding a predetermined product specified in this table, thus securely keeping the information confidentiality.

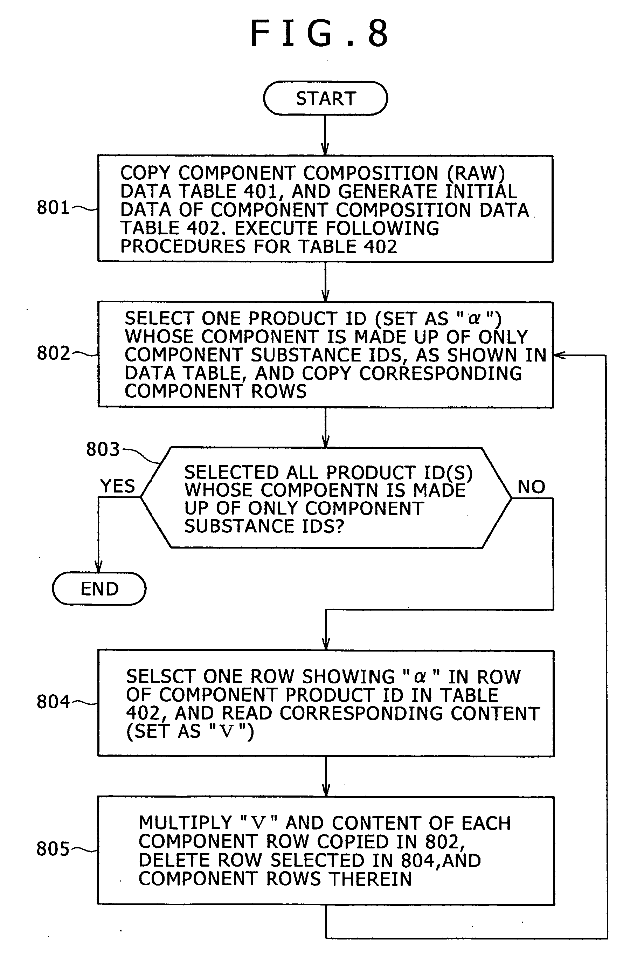

Fig. 8 shows an operational flow for explaining component/composition data processing executed by the forward chain processor 104. First, the calculator 104 copies the raw data table 401 to generate initial data of the component/composition data table 402 (801). The calculator 104 executes the following procedures for this data table 402. The calculator 104 searches the copied data table for one product ID representing a product that is made up of only component substances (specified by component substance IDs). This product includes components all of which are clearly defined in their substance level. It means that this product is an uppermost product that is made up of nearly raw materials. The calculator 104 copies all rows of this product (802). If this procedure is done for all of such products, the calculator 104 ends this operation (803). If this procedure is not done for all of such products, the calculator 104 selects one row showing "α" in the field of "component product ID" in the data table, and reads its corresponding content (set as V) (804).

The forward chain processor 104 multiplies the content of each component row copied in 802, deletes the row selected in 804, and inserts a multiplied result therein (805). That is, the component row of a component product is replaced by the component rows of plural component substances. The calculator 104 repeats this replacement (conversion), resulting in expanding from the upstream to downstream. The data table shows simply the substance compositions in the end. After this operation is ended, if a component product is still specified in the table, it means that there is a product whose substance compositions on the upstream side are not defined. Such information is stored as it is. If information is additionally registered afterwards from a manufacturing company, data regarding substance components is stored, thus clearing the remaining information.

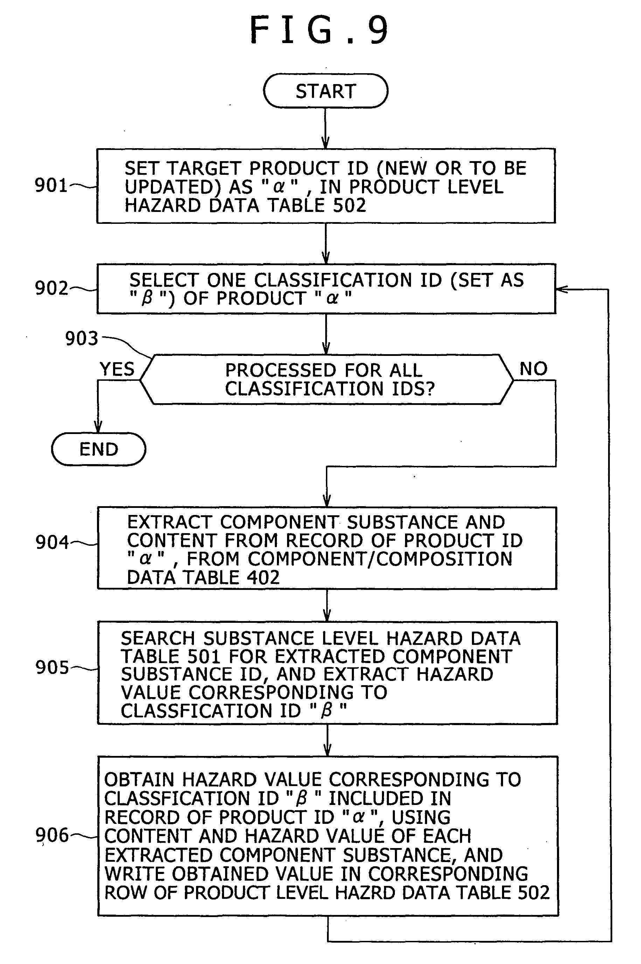

Fig. 9 shows an operational flow for explaining hazard data processing executed by the forward chain processor 104. The processor 104 sets a target product ID (new or to be updated) to be processed as "α" in the product level hazard data table 502 (901). Next, the calculator 104 selects one classification ID (set as "β") of this product "α" (902) . If the following procedures have already been executed for all classifications, the calculator 104 ends this operation (903) . If the following procedures have not already been executed for all classifications, the calculator 104 extracts the component substance information and content information of the record corresponding to the product ID "α" from the component/composition data table 402 (904). The calculator 104 searches the substance level hazard data table 501 for the extracted component substance ID, and extracts a hazard value of the classification ID "β" (905).

The calculator 104 obtains a hazard value corresponding to the classification ID "β" included in the record of the product ID "α", using the content and hazard value of each extracted component substance. Then, the calculator 104 writes the obtained value in its corresponding row of the product level hazard data table 502 (906). In particular, a product hazard is obtained based on hazard values of the component substances, using an equation suitable for the hazard classification.

For example, to obtain "mouse acute toxicity (LD50)", products of reciprocals and their corresponding component percentages are added to each other, and further a reciprocal of the sum is calculated. For example, if substances of LD 4 mg (50%) and substances of LD 10 mg (30%) are included, 1/(0.5 × 1/4+0.3 × 1/10) = 6.45 mg.

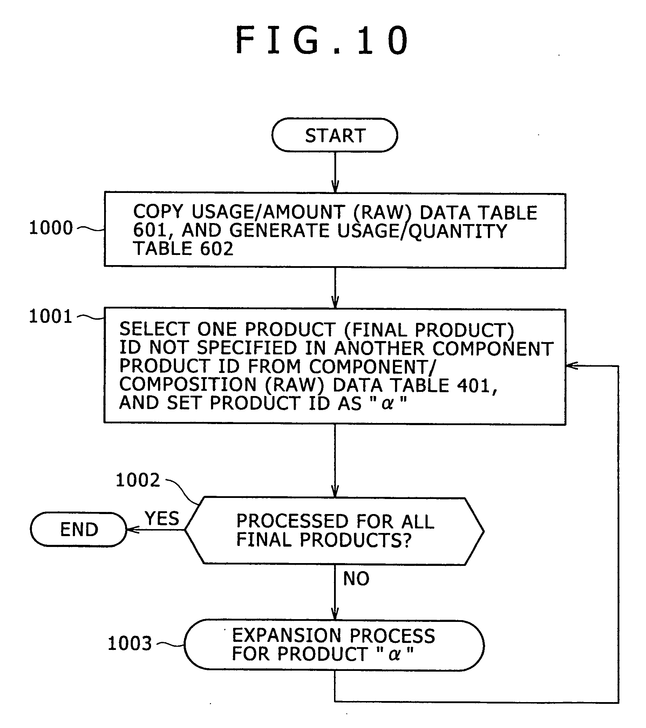

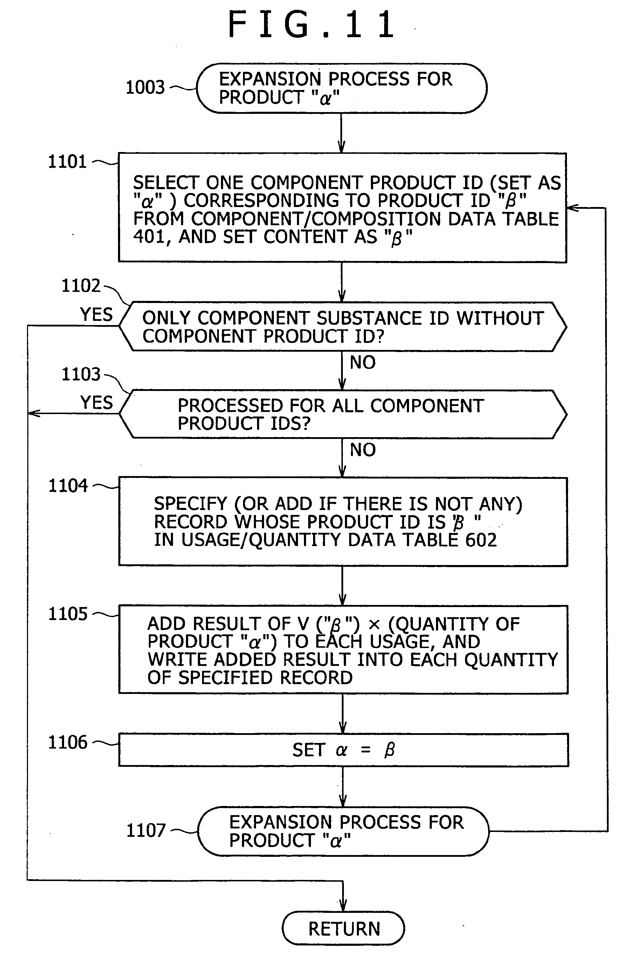

Fig. 10 and Fig. 11 show operational flows for explaining hazard data processing executed by the backward chain processor 105. First, as shown in Fig. 10, the calculator 105 copies the usage/quantity (raw) data table 601 to generate an initial state of the usage/quantity data table 602 (1000).

Hereinafter, this initial table is repeatedly updated, thereby generating the usage/quantity data table 602. To do this, the component/composition (raw) data table 401 is necessary. The backward chain processor 105 refers the data table 401, selects one end product (product whose product ID is not shown in any other component product ID row), and sets its product ID as "α" (1001). If this procedure has already been done for all end products, the backward chain processor 105 ends this operation (1002). If this procedure has not already been done for all end products, the backward chain processor 105 executes an operation shown in Fig. 11 for the product "α" (1003).

Fig. 11 shows the above-described operation in detail. First, the backward chain processor 105 selects one component product ID (set as "β") of the product ID "α", and sets its corresponding content as V(β) (1101). If the product "α" is a raw material and is composed of only component substances, the backward chain processor 105 cannot select a component product ID "β" , thus returning into the flow of Fig. 10 (1102) . If the following procedures have already been completed for all component products "β", the process returns into the flow of Fig. 10 (1103). If the following procedures have not already been completed for all component products "β", the backward chain processor 105 specifies a record of a product ID "β" from the usage/quantity data table 602.

If such a record does not exist, the backward chain processor 105 adds a new row thereinto (1104). The backward chain processor 105 reads the quantity data in association with each usage in the record, adds a result of V(β)× (quantity of product "α") to the read quantity data, and writes the added result into each quantity data (1105). Such calculation results represent the usage and quantity of the component product "β" included in the product "α". The backward chain processor 105 replaces "α" by "β" in order to execute such a procedure for the component of "β" (1106), and recurrently calls the same routine (1107). In this case, the recurrent call is widely executed until component expansion is performed up to the raw material product of the uppermost stream. In this manner, if such a process is completed for a predetermined component, the same process is executed for other components. Thus, in the end, the usage and quantity of all products (on the upstream side) used for the product "α" selected at the beginning in the process of Fig. 10 are represented.

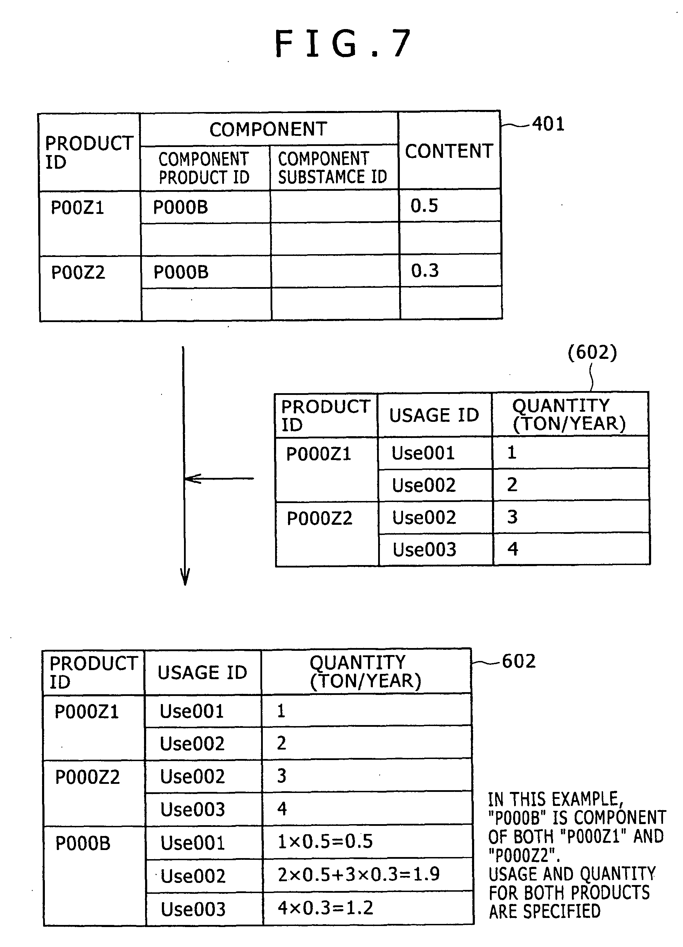

The above process will now specifically be explained with reference to Fig. 7. The component/composition (raw) table shown in the upper part of the illustration shows that a product P000B is a component part (50%) of a finished product P000Z1, and also is a component part (30%) of a finished product P000Z2. The usage/quantity data table, shown on the right side of the illustration, is in an initial state showing specific values representing quantities of both finished products according to usage. Based on such numerical information, data representing the usage and quantity of the product P000B (as a component) is calculated as follows.

For the product P000Z1, because the quantity of the product P000Z1 for the usage "Use001" is 1 ton, the quantity of the product P000B (a component part (50%) of the product P000Z1) for the usage "Use001" is 1 × 0.5 = 0.5 ton. Similarly, the quantity of the product P000B for the usage "Use002" is 2 × 0.5 = 1.0 ton. For the product P000Z2, the quantity of the product P000Z2 for the usage "Use002" is 3 tons. The quantity of the product P000B (a component part (30%) of the product P000Z2) for the same usage is 1.9 tons for total, based on an equation of 3 × 0.3 = 0.9 ton plus the obtained 1.0 ton. By repeating such an operation, the supply chain can be traced back from the downstream side to upstream side, thereby obtaining the sum of the usage and quantity of the middle and raw material products. Note that the procedures of this backward chain calculation is based on the indicated components of finished products. Therefore, the calculation result has an error, because of the quantity of substances lost upon a chemical reaction or newly generated for some reason.

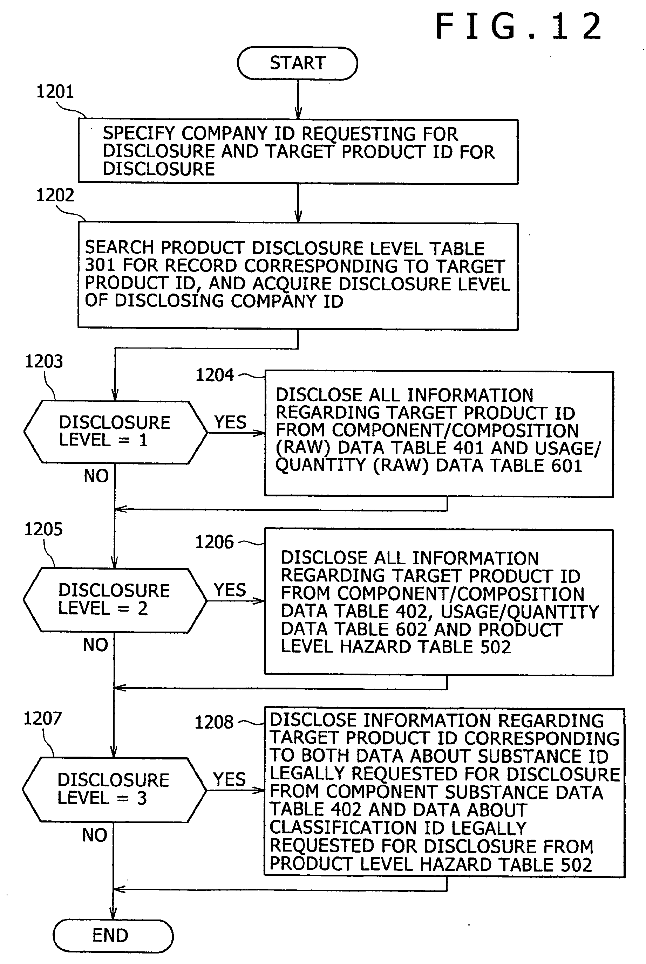

Fig. 12 shows an operational flow for explaining an operation executed by the confidentiality cancellation processor 106. The processor 106 specifies a company ID requesting for information disclosure and a target product ID for disclosure (1201). The processor 106 searches the information disclosure level table 301 for a record corresponding to the target product ID, and acquires a disclosure level corresponding to the addressee company ID (1202). The processor 106 selects information items for disclosure in accordance with the acquired disclosure level.

If the disclosure level is "1", the processor 106 discloses all information regarding the target product ID from the component/composition (raw) data table 401 and the usage/quantity (raw) data table 601 (1203, 1204).

If the disclosure level is "2" , the processor 106 discloses all information regarding the target product ID from the component/composition data table 402, the usage/quantity data table 602 and the product level hazard table 502 (1205, 1206).

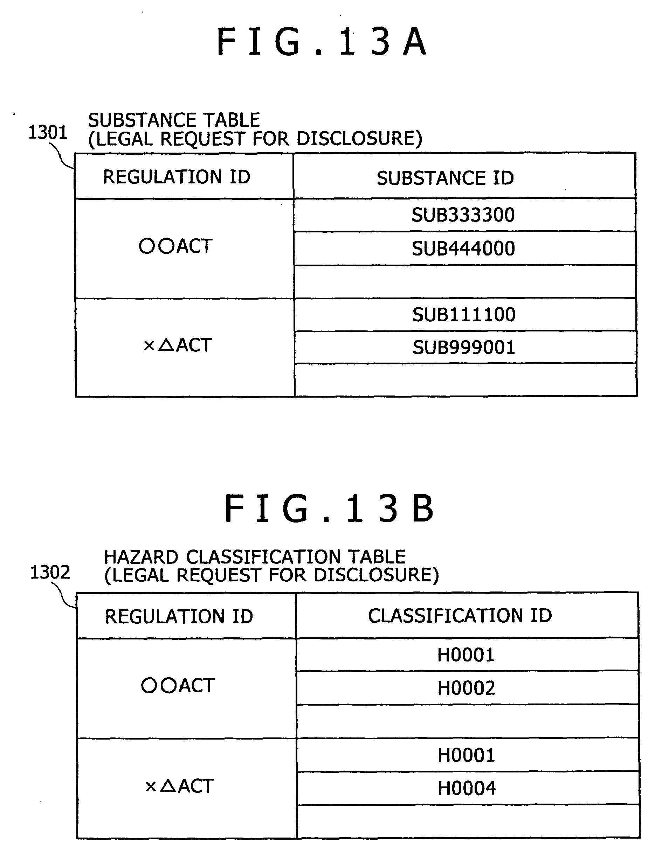

If the disclosure level is "3" , the processor 106 discloses information regarding the target product ID, in association with data representing a substance ID based on a legal request for disclosure from the component/composition data table 402 and data representing a classification ID legally requested for disclosure from the product level hazard table 502 (1207, 1208). Fig. 13 shows data for determining whether or not there is a legal obligation to disclose information.

Fig. 13A exemplarily illustrates a substance table (legal request for disclosure) (1301) for specifying substance IDs legally requested for disclosure, Fig. 13B and a hazard classification table (legal request for disclosure) (1302) for specifying hazard classification IDs legally request for disclosure. Such tables are stored in advance in the memory device. The processor 106 executes data processing based on such tables, thereby partially disclosing some selected information.

When disclosing data, substance identifiers and law titles (regulation IDs and identifiers provided for regulation) may be displayed in association with each other on a display screen. By so doing, it is obvious which data is disclosed based on what law. In combination with this display and another display based on the path of the supply chain, the user can easily know what data on which part of the supply chain to disclose based on what law.

As described above, the supply chain has a complicated form of network, because there are plural companies manufacturing raw materials and/or middle products. In some cases, the route of the supply chain may go through plural nations or plural companies. Even in such a case, confidential data of each company can be secured, and information can be disclosed based on each nation's rules.

In this manner, the system according to this embodiment collects/calculates/shares environmental information regarding plural products manufactured by plural companies, and includes a product environmental information sharing database for data transmission through data communications with the plural companies. The product environmental information sharing database includes a data registration processor, a product information memory section and a backward chain processor. The data registration processor stores data, including component composition information regarding another company's products and constituent substances as product materials and information regarding the quantity of products according to usage. Such data is received from the plural companies. The product information memory section stores all of the registered data. The backward chain processor traces the chain regarding the composition information representing component products purchased from other companies, in a direction from the finished products to the middle products whose quantity information is specified according to usage. That is, the backward chain processor trances the product supply chain in a backward direction, while calculating the information regarding the quantity of products according to usage. Further, the backward chain processor sequentially calculates information regarding the quantity of middle products and raw materials according to usage.

The system also includes the forward chain processor tracing the chain of the composition information representing component products purchased from other companies in a direction from the raw material products to the middle products whose component compositions of their constituent substances are clearly specified. By so doing, the forward chain processor traces the product supply chain in a forward direction. In addition, the forward chain processor sequentially calculates component composition information of constituent substances of raw materials up to finished products. The backward chain processor traces the product supply chain in a backward direction from the finished products to middle products whose quantity information is clearly specified according to usage, while calculating the quantity information according to usage. The backward chain processor sequentially calculates quantity information of the middle products up to raw materials according to usage.

In this embodiment, the system includes the confidentiality cancellation processor which discloses a calculated result of the calculator in response to a request for information disclosure from anther company, other than raw data registered from the company.

As a result, the system can advantageously realize collection, analysis and sharing of information necessary for assessing environmental impact risks, in association with a group of products put on the market through the complicated form of the supply chain, still in consideration of information confidentiality.

Further, the system can acquire usage and quantity information (the used quantity and the sold quantity) necessary for risk assessment. Such usage and quantity information cannot be acquired simply based on the information of the upstream side of the supply chain.

## Claims

1. A product environmental information sharing management system for managing environmental information in association with a plurality of products manufactured by a plurality of companies, the system comprising:
a product environmental information sharing database which sends and receives information to and from the plurality of companies, and the database including:
a product information memory section which stores component composition information representing other companies-manufactured products or constituent substances of product materials and information regarding a quantity of products according to usage;
a data registration processor which stores data received from the plurality of companies; and
a backward chain processor which traces a chain of composition information representing other companies-manufactured component products in a direction from finished products to middle products whose quantity information is clearly specified according to usage so as to calculate the quantity information according to usage, and sequentially obtains quantity information of the middle products up to raw materials according to usage.

2. A product environmental information sharing management system for managing environmental information in association with a plurality of products manufactured by a plurality of companies, the system comprising:
a product environmental information sharing database which sends and receives data to and from the plurality of companies through communications, the product environmental information sharing database including:
data registration means for registering component composition information representing other companies-manufactured products or constituent substances of product materials and information regarding a quantity of products according to usage, based on data registered from each of the plurality of companies;
a product information memory section that stores all of the registered data;
a forward chain processor which traces a product supply chain by following a chain of composition information representing other companies-manufactured product components in a forward direction from raw material products to middle products whose constituent substances in component composition are clearly specified, and sequentially calculates component composition information representing constituent substances of raw materials up to finished products, and
a backward chain processor which traces a product supply chain by calculating information representing a quantity of products according to usage in a backward direction from the finished products to middle products whose quantity information is clearly specified according to usage, and sequentially calculates quantity information of the middle products to raw materials according to usage.

3. A product environmental information sharing management system according to claim 1, further comprising a confidentiality cancellation processor which discloses a calculated result of a calculator in response to an information disclosure request from a company.

4. A product environmental information sharing management method for managing environmental information in association with a plurality of products manufactured by a plurality of companies, the method comprising the steps of:
receiving product information from the plurality of companies;
storing component composition information of other companies-manufactured products and constituent substances as product materials and information regarding a quantity of products according to usage, in a product information memory section, based on the received information; and
processing information regarding a quantity of products according to usage in a direction sequentially from downstream products to upstream products based on information regarding a pre-stored route of a supply chain, in association with component composition information representing other companies-manufactured product components.

5. The method according to claim 4, further comprising disclosing information regarding a quantity of the products according to usage to the plurality of companies, based on pre-stored data regarding a legal request for disclosure.

6. The method according to claim 4, further comprising disclosing information regarding a quantity of the products according to usage to the plurality of companies, based on pre-stored data regarding a legal request for disclosure and a predetermined information disclosure level.

7. The method according to claim 4, further comprising displaying, on a display screen, information regarding a quantity of the products according to usage in association with a corresponding substance identifier and a law title, based on pre-stored data regarding a legal request for disclosure.
